# EUROPEAN PATENT SPECIFICATION

(11) **EP 4 217 255 B1**
(45) Date of publication and mention of the grant of the patent: **29.01.2025**
(21) Application number: 21831098.5
(22) Date of filing: 22.09.2021
(51) Int. Cl.: B62D 33/04, B65D 90/02, B65D 90/08

(54) **SUPERSTRUCTURE, ESPECIALLY FOR GOODS VEHICLES WITH THERMALLY INSULATED LOAD SPACE, AND METHOD FOR THE MANUFACTURE OF SUCH SUPERSTRUCTURE**
AUFBAU, INSBESONDERE FÜR NUTZFAHRZEUGE MIT WÄRMEISOLIERTEM LADERAUM UND VERFAHREN ZUR HERSTELLUNG EINES DERARTIGEN AUFBAUS
SUPERSTRUCTURE, EN PARTICULIER POUR VÉHICULES DE TRANSPORT DE MARCHANDISES AVEC ESPACE DE CHARGEMENT ISOLÉ THERMIQUEMENT, ET PROCÉDÉ DE FABRICATION D'UNE TELLE SUPERSTRUCTURE

(30) Priority: 25.09.2020 HU 2000314
(43) Date of publication of application: 02.08.2023
(73) Proprietor: Chris Columbus Kft., 2884 Bakonyszombathely (HU)
(72) Inventor: GYURCSIK, János, 2882 Kerékteleki (HU)
(74) Representative: Kovári, Zoltán
(86) International application number: PCT/HU2021/050052
(87) International publication number: WO 2022/064232

(56) References cited:
- EP-A1- 2 524 856
- JP-A- 2012 144 054
- US-A1- 2005 189 404

## Description

### The field of the invention

The object of the present invention relates to a superstructure, especially for goods vehicles with thermally insulated load space, and to a method for the manufacture of such superstructure.

### The state of the art

In the case of greater weights and/or amounts of goods these goods are characteristically loaded into shipping containers or superstructures and are transported to the required locations via public roads, air, water or railway. In the case of shipping of this nature, the joint weight of the shipping containers, superstructures and of the goods together determine the transportable amount.

In the case of special consignments, such as in the case of chilled or frozen goods, in addition to the weight an important factor is to have good thermal insulation, and in certain cases a serious load capability is required due to the cooling apparatus. In addition shipping containers, superstructures must be able to withstand the external-internal effects occurring in the transport vehicle (twisting, shaking, forces originating from the movement of the chassis). In the same way, a bulletproof structure in the case of the transportation of works of art, money or other valuable consignments is of great significance so that these goods may be transported with greater security.

In the case of transportation performed on public roads, the transportation of the goods loaded onto goods vehicles may take place in a so-called superstructure, when the goods are not placed in a separate shipping container that may be independently moved, but in the load space forming an integral part of the goods vehicle. Such superstructures, load space formations are created together with the chassis of the goods vehicle and such superstructures and the goods vehicle cannot be disassembled into separate parts without a destructive process being applied. Alternatively the transportation may take place in containers, which are just lifted onto the goods vehicle and are secured there in a releasable way either to the goods vehicle or to another container. Then at the destination the container may be easily lifted off the goods vehicle.

Patent document number US8342588B2 presents a sandwich panel from which an insulated shipping container or superstructure may be assembled. The sandwich panels consist of two composite layers and of an insulation layer between them. The insulation layer contains a foam core material and a drying layer. In order to assemble a complete shipping container or superstructure, the sidewalls may be inserted between the support secured to the lower composite layer of the sandwich panel functioning as the floor and the upper layers of the floor. In the case of shipping containers formed in this way, the connection of the individual wall elements is performed with the secured supports. Because of the joints the walls necessarily have a large thickness in order to provide sufficient support and the formation of the sandwich panels does not make it possible to reduce the weight of the structure either. In addition, the formation of the supports at the joints takes the place of the insulation thereby forming thermal bridges at the corners.

Patent document number CN2378975U presents a connection similar to the previous example for the assembly of small-sized shipping containers.

Utility model number DE29907385U1 describes sandwich panels that consist of a hard foam and a covering layer on the one side, such as fibre-reinforced plastic, and these panels may be secured to each other using a H-profile beam. The straight joints presented for the connection of the elements to each other are suitable for connecting the elements to each other in a straight line and so for increasing the size of the wall element forming the elements. This solution, however, is unsuitable for connecting the various wall elements together. In addition the beams may create thermal bridges, which damages the insulating function.

Patent document number EP3365240B1 describes a shipping container that is suitable for the transportation of a single work of art.

Patent document number US20050189404A1 describes an insulation panel for use in thermally insulated shipping containers, wherein the panel comprising a rigid core of an insulation material, and the core being wholly encompassed within a polyethylene foam envelope. The disadvantage of the panel is that it creates thermal bridges, so it can only be thermally insulated with the foam envelope.

Patent document number EP2524856 A1 describes a superstructure especially for goods vehicles with a thermally insulated load space, cromprising wall elements and armour.

As a consequence of the above there is a need for a superstructure or shipping container that does not require beams to hold together its structure, that is sufficiently strong for the longer transportation of greater weights and that is built up from panels of a material that may be adapted for various purposes. For example, in the case of the transportation of cooled goods it should be well insulated and be free of thermal bridges, or in the case of the transportation of valuable goods it should have reinforced external protection. Furthermore, it should have a low weight as compared to its size so that with respect to the gross weight it should be possible to transport the most useful load (goods) possible in it and, when empty, it should not burden the goods vehicle more than necessary, thereby reducing its fuel consumption.

### Brief description of the invention

The present invention is based on the recognition that by securing low-weight panels to each other made using a material selected to ensure sufficient rigidity and by using appropriate joints, superstructures may be assembled without the use of supporting beams that are resistant to forces and that have a low weight due to the lack of beams and the selection of materials and that are adapted for use for goods vehicles with a thermally insulated load space.

In accordance with the above the present invention relates to a superstructure especially for goods vehicles with a thermally insulated load space, which has wall elements and armour, and characteristic of which is that the wall elements are constructed from negative profiles and/or positive profiles and a filling part, the negative profiles and/or the positive profiles form a frame that encompasses the filling part, the wall elements have a front panel and a back panel, and the tongues located on the positive profiles of the individual wall elements connect into the grooves located on the negative profiles of the neighbouring wall elements.

According to a preferred embodiment of the superstructure according to the invention the order of the layers of the negative profiles and the positive profiles forming the wall elements from the inside progressing towards the outer sides is as follows: core material and laminate; which laminate contains resin and a substrate material; and the filling part of the wall elements contain core material.

According to another preferred embodiment of the superstructure according to the invention, the core material is selected from among the following: polystyrene foam, PVC foam, polyethylene foam, balsawood, or a combination of these; the substrate material is selected from among the following: glass fibre matting, woven glass fibre, biaxial fibreglass, balsawood, or carbon fibre, aramid, or a combination of these; and the resin is selected from among the following: epoxy resin, polyester resin, low styrene polyester resin, vinyl ester resin, or a combination of these.

According to another preferred embodiment of the superstructure according to the invention the armour is polyester panelling, or metal panelling, preferably glass fibre reinforced polyester panelling.

According to another preferred embodiment of the superstructure according to the invention the core material is polystyrene foam, the substrate material is biaxial fibreglass, and the resin is epoxy resin.

According to another preferred embodiment of the superstructure according to the invention among the wall elements one of them is a floor element, and at least one front panel and/or back panel of the floor element contains at least one further layer of laminate, and preferably at least one further layer of balsawood as substrate material between two layers of laminate.

According to another preferred embodiment of the superstructure according to the invention the front panel and the back panel of the wall elements are provided with armour in such a way that after the wall elements have been secured to each other substantially the entire surface of the front panel and the back panel are covered with armour.

Another preferred embodiment of the superstructure according to the invention also contains an apparatus selected form the following: cooling apparatus, freezing apparatus, heating apparatus, ventilation apparatus, watering apparatus and a combination of these.

In addition the present invention also relates to the manufacture of the superstructures according to the above, which contains the following steps:
a) Forming a frame from negative profiles and/or positive profiles and the space delimited in this way is filled with core material in order to create the filling part;
b) Covering the finished wall elements with armour, preferably with glass fibre reinforced polyester panelling to the extent that after the wall panels have been secured to each other the entire free surface of the front panel and the back panel is covered;
c) Fitting together the finished wall elements using the grooves located in the negative profiles and the tongues located in the positive profiles, preferably the space remaining at the joints is filled with adhesive or resin.

The superstructure according to the invention may be preferably used for the transportation of heat-sensitive goods.

The superstructure according to the invention may be preferably used for the transportation of works of art, money, or gold.

In the figures
Figure 1 shows a perspective, exploded front view of the superstructure according to the invention;
Figure 2 shows a perspective front view of the negative profile according to the invention;
Figure 3 shows a perspective top view of the positive profile according to the invention;
Figure 4 shows the order of layers of the negative profile according to the invention;
Figure 5 shows a perspective top view of the floor element according to an embodiment of the invention;
Figure 6 shows a perspective side view of a corner of a superstructure according to an embodiment of the invention;
Figure 7 shows the order of layers of a floor element according to an embodiment of the invention;
Figure 8 shows a perspective front view of the connection of the sidewalls according to the invention in the longitudinal direction.

### Detailed description of the invention

The essence of the superstructure according to the invention consists of that the connection of panels with suitable rigidity to each other using suitable joints provides sufficient strength and low weight in the case of an appropriate selection of materials for the manufacture of superstructures suitable for the transportation of goods. Due to the lack of thermal bridges such superstructures may be used to good effect in goods vehicles with a thermally insulated load space.

In the context of the present invention shipping container is understood to mean transportation apparatuses in which goods may be loaded for the purpose of transportation. These shipping containers are characteristically closed on all sides and are preferably supplied with a loading opening, or door. However, those possibilities are not excluded when these shipping containers are open on at least one side, for example, for the purpose of facilitating unloading. Shipping containers are understood to mean transportation devices secured to goods vehicles with releasable fixing, or transportation devices placed on goods vehicles without securing, which are characteristically rectangular cuboid in shape, but they may also have various shapes depending on the shape of the transported goods and the type of unloading.

In the context of the present invention superstructure is understood to mean transportation apparatuses that are created together with the chassis of the goods vehicle.

In the context of the present invention work of art is understood to mean valuable objects the value of which is at least equal to the value of silver of the same weight.

Both superstructures and shipping containers are secured to the goods vehicle during transportation. The difference between the two transportation apparatuses is that while the shipping container may be lifted off the goods vehicle and the shipping container, along with the goods inside it, may be transferred onto another vehicle or set down onto the ground, a superstructure may not be removed along with the goods from the goods vehicle, instead the goods themselves must be loaded into and out of the superstructure of the goods vehicle. However, from the point of view of the present invention, it is not necessary to differentiate between these two types of transportation apparatus, because the idea behind the invention may be applied to both types of transportation apparatus. Due to this, in the following, in the context of the present invention it will be called a superstructure, but the concept of superstructure will also include shipping containers.

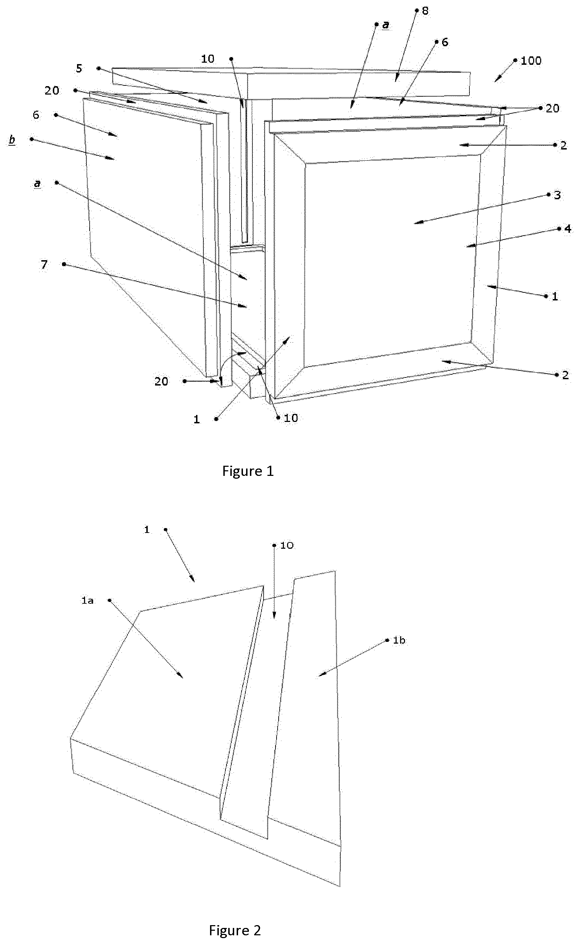

Figure 1 shows a superstructure marked in its entirety with reference sign 100. The connection fittings of the superstructure 100 each consist of the connection of one negative profile 1 and one positive profile 2, and these form the frame of the front wall 4, the back wall 5, the sidewalls 6, the floor element 7 and the roof element 8. The middle parts of each of the individual wall elements are filled with filling parts 3. Lines separating the individual profiles have been indicated on the front wall 4 for the purpose of better understanding.

Figure 2 shows the negative profile 1. The negative profile 1 consists of an internal part 1a, an external part 1b and a groove 10 located between the two parts, which is for ensuring the structural connection of the superstructure 100.

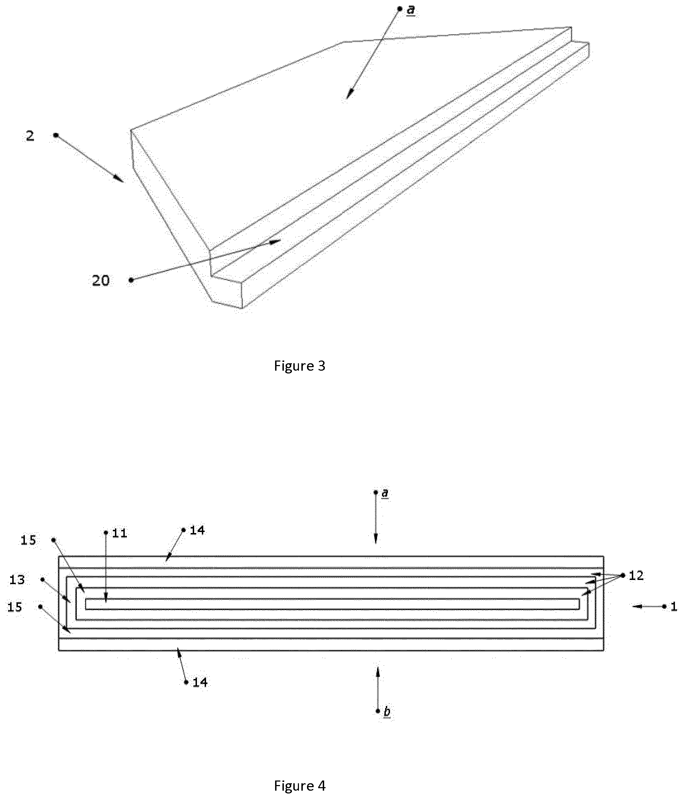

Figure 3 shows a positive profile 2, the tongue 20 part of which connects into the groove 10 part of the negative profile 1.

Figure 4 shows the layer order of the negative profile 1. This consists of an internal core material 11, a resin 15 encompassing this and a substrate material 13 placed on it. The substrate material 13 is covered with resin 15. The substrate material 13 along with the two layers of resin 15 form a continuous layer, which in the following is called a laminate 12. In other words the core material 11 of the negative profile 1 is covered on all sides by a laminate 12. Armour 14 is glued onto the negative profile 1 produced in this way onto the front panel a and back panel b parts after formation as a wall element.

The structure of the filling part 3 contains core material 11.

The walls of the superstructure 100 may be assembled from the negative profiles 1, the positive profiles 2, and the filling parts 3, as is shown in figure 1. These walls may create a front wall 4, a back wall 5, two sidewalls 6, a floor element 7 and a roof element 8 in the case of a cuboid or rectangular cuboid superstructure 100.

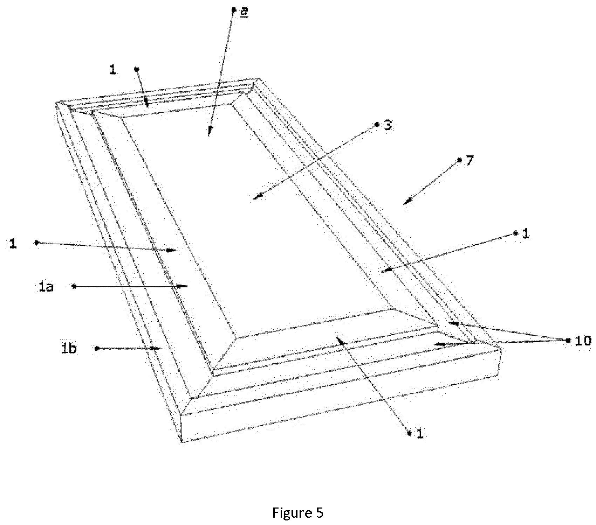

The structure of the floor element 7 may be seen in figure 5. The floor element 7 consists of four negative profiles 1 and a filling part 3. A frame is created from the four negative profiles 1, which is made possible by that the ends of the negative profiles 1 are cut off at an angle of approximately 45° (Figure 1). The filling part 3 is placed into the middle, empty part of the frame created in this way, in such a way that by itself or with the use of resin 15 it fills in the space between the negative profiles 1.

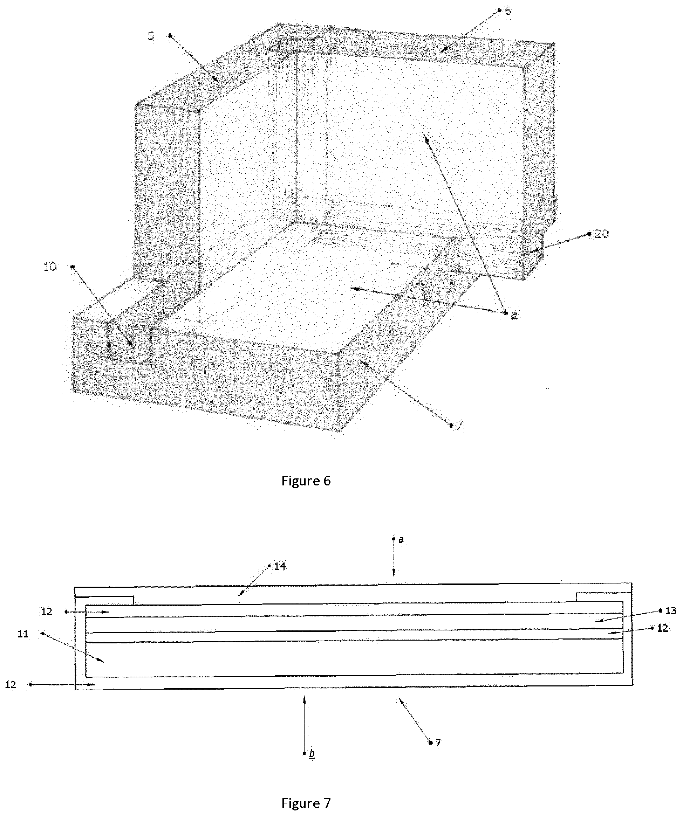

Following this the assembled floor element 7 is preferably provided with an additional layer of laminate 12 in the way shown in figure 7 at least on the front panel a and back panel b surfaces so that the floor element 7 forms a continuous element. The structure may also be reinforced with a layer of balsawood, as additional substrate material 13, between two layers of laminate 12 preferably at least on one of its surfaces so that a floor with a greater load-bearing capability is obtained. Furthermore, for the purpose of reinforcing the structure, it may be worthwhile leaving the laminate 12 placed on the back panel b surface longer at the back panel b surface and folding it up at least along the two facing sides so that it covers at least a part of the front panel a surface so as to reinforce the structure of the floor element 7 in this way.

In the course of the manufacture of the floor element 7 to facilitate the curing of the resin 15 and, optionally, the adhesive, it is worthwhile placing it on a vacuum table, subjecting it to a pressure of at least 200 mbar and waiting for the final development of the layers, for the curing of the resin to be completed. After the resin has cured, armour 14 is secured to the front panel and back panel of the floor element 7 on the vacuum table with high-strength structural adhesive.

In the case of assembling the front wall 4 and the back wall 5, two vertically positioned negative profiles 1 and two horizontally positioned positive profiles 2 are used to create the frame. The filling part 3 is placed into the middle, empty part of the front wall 4 and back wall 5 so that by itself or using adhesive or resin 15 it fills the space between the negative profiles 1 and the positive profiles 2. Following this with laminate 12 reinforcing, armour 14 is glued to at least the front panel a and back panel b preferably also in a vacuum.

In the case of the assembly of the roof element 8 four negative profiles 1 are used to form the frame, and a filling part 3 is used in the middle part in such a way that it fills in the empty part of the roof element 8 by itself or with the use of adhesive or resin 15. In order to maintain the rigidity of the roof element 8, armour 14 is secured to its front panel a and to its back panel b using high-strength structural adhesive.

The sidewalls 6 are produced in the same way as the roof element 8, only with the difference that positive profiles 2 are used instead of negative profiles 1.

In order to create the structure of the superstructure 100, the wall elements produced in the way described above are fitted together in such a way that the tongue parts 20 of the individual wall elements are fitted into the groove parts 10 of the neighbouring wall elements.

Naturally, the invention is not restricted to the wall elements named above, the order of the layers of the wall elements may be extended on the condition that at least one layer of laminate 12 or armour 14 is required on the front panel *a* and the back panel *b* in order to keep the wall element together.

The positive profiles 2 of the sidewalls 6 may be fitted into the negative profiles 1 of the floor element 7 with the use of the grooves 10 and the tongues 20. Following this the front wall 4 and the back wall 5 may be fitted into the negative profiles 1 of the floor element 7 and, as the next step, the tongues 20 located on the sidewalls 6 may be fitted into the grooves 10 of the front wall 4 and the back wall 5. Figure 6 depicts the back right corner of a superstructure 100 assembled in this way with the assembly of the floor element 7, the back wall 5 and the sidewall 6. The roof element 8 may be placed on the structure constructed in this way, the negative profiles 1 of which slip over the tongues 20 of the sidewalls 6, the front wall 4 and the back wall 5.

This side joint assembly, in other words how a horizontal groove 10 with a vertical tongue 20, or a horizontal tongue 20 with a vertical groove 10 creates the connection between the wall elements, makes it possible to create a superstructure 100 of the appropriate load-bearing capacity without the use of separate beams or rigidity elements.

Naturally, the individual wall elements may be provided with a door or opening, which opening may be only for permitting the entry of light, closable, or completely open as well, or for permitting the flow of air, for example. In addition, in the case of superstructures 100 used for various purposes, the superstructure 100 may be provided with various accessory apparatuses, such as a cooler, freezer or heating apparatus in the case of heat-sensitive loads, watering apparatus in the case of the transportation of plants, and ventilation apparatus in the case of the transportation of animals, etc. In addition, it is necessary to secure the superstructure 100 onto the goods vehicle, or to create it so it is integral with the chassis of the vehicle, which belongs to the compulsory knowledge of the person skilled in the art.

The superstructure 100 assembled in this way is self-supporting, in other words it maintains its structural state without any external force. For the performance of various logistics tasks, the connection of the individual wall elements to each other may be reinforced with the use of adhesive, own-material adhesive reinforced with a substrate material 13, with resin 15 used in the production of the profiles, or with the use of other non-releasable fixing methods so that the structure of the superstructure 100 is capable of withstanding greater external forces. External forces are understood to mean forces acting upon the superstructure 100 from outside, such as objects, vehicles colliding with it, and forces exerted from inside such as forces originating from the movement of the objects or load placed inside the superstructure 100.

The roles of the layers used in the case of the individual elements of the superstructure 100 are different. The role of the core material 11 is to fill the space so that the substrate material 13 has something to secure to. In addition, it has an insulating role, especially if the function of the superstructure 100 is the storage of heat-sensitive goods, such as, for example, cooled, frozen goods, or if the objective is to keep the goods warm. The core material 11 may be polystyrene foam, PVC foam, polyethylene foam, balsawood, etc. The core material 11 may have a honeycomb structure, for example.

The role of the resins 15 is to secure the various structural layers to each other and to create a smooth surface for the adhesion of the armour 14. For example, the following may be used as resin 15: epoxy resin, polyester resin, low styrene polyester resin, vinyl ester resin. The selection of the appropriate resin 15 belongs to the compulsory knowledge of the person skilled in the art in the knowledge of the core material 11 and the substrate material 13.

The role of the substrate material 13 is to reinforce the load-bearing capacity and durability of the individual wall elements. The substrate material 13 makes it possible for the individual wall elements to withstand the weight of larger consignments and to be resistant to external forces. Such substrate material 13 may be glass fibre matting, woven glass fibre, biaxial fibreglass, balsawood, or carbon fibre, aramid.

The role of the armour 14 used as the protective covering is to keep the wall elements together and to provide external protection. Possible armour 14 materials include plastic, preferably glass fibre reinforced polyester panelling, polyester panelling, or metal panelling, such as aluminium or steel.

The armour 14 used for keeping the completed wall elements together and as an external covering is secured to the given wall element using adhesive. Such adhesive may be MS polymer, polyurethane, hybrid or two-component structural adhesive, or the resin 15 used for the wall elements with the substrate material 13 or without it.

The assembly of the superstructures may take place in four steps, when in the first step the negative profiles 1 and the positive profiles 2 are manufactured, which perform a bracing role, and it is through these that the various wall elements are connected to each other. The length of the profiles is formed so that they correspond to the length of the planned wall element, preferably a certain length shorter than the wall element itself in order to make it possible to glue the elements. Furthermore, due to the 90° connection between the walls that is generally used, it is necessary to form the ends of the profiles at an angle of 45°. Naturally, if certain of the walls of the superstructure 100 connecting to one another are not at right angles to each other, the ends of the profiles must be formed at a different angle, as is known to the person skilled in the art.

In the second step the individual wall elements are created in such a way that the frame of the given wall element is assembled using the negative profiles 1 and/or the positive profiles 2, and the empty area enclosed by the profiles is filled with core material, thereby creating the filling part 3 element. Depending on use, additional laminate 12, substrate 13 may be secured to a part of or to the entire assembled wall element. For example, in the case of a floor element 7 at least one of the entire surfaces of the floor element 7, preferably surface a may be preferably covered with balsawood and/or biaxial fibreglass as substrate material 13, so that it can withstand the load of the cargo.

Figure 7 shows the order of the layers of an embodiment of the floor element 7, which progressing from the inside to the outside contains core material 11. The core material 11 is covered on both sides by a laminate 12. Due to the load-bearing capacity of the floor element 7, a balsawood layer is also used as substrate material 13 on the future upper surface, which is again covered with laminate 13 so that the armour 14 may be secured onto it as external covering. Furthermore, in order to reinforce the structure, the laminate 12 on the surface opposite to the surface reinforced with substrate material 13 is left longer and folded up onto the surface covered with substrate material 13, which in this way covers it from above at the edges. Due to this the armour 14, as shown in figure 5, is thinner on surfaces above the laminate 12, and where there is no laminate 12, there it is thicker for the purpose of ensuring an even surface. Naturally those solutions are not excluded when the laminate 12 is thicker at the inner parts, or due to the pressure exerted the layers at the external parts are more compacted, thereby creating tight contact on the entire surface.

In the third step the armour 14, preferably fibreglass reinforced polyester panelling, is secured to the surface of the front panel a and of the back panel *b* of the wall element.

In the last step the assembled wall elements are fitted to one another, thereby creating the superstructure 100.

In the case of manufacture performed in two steps there is no need for the separate manufacture of profiles and filling parts, instead by using a tool corresponding to the size of the wall element, the wall elements are produced in one step using the aforementioned groove 10 and tongue 20 formations. At least one layer of laminate 12, optionally with further substrate material 13 reinforcing, is placed onto the front panel *a* and onto the back panel *b* of the wall element containing core material 11. Additionally, in the second step armour 14 is applied onto the wall element, onto its front panel *a* and back panel *b.*

In the case of single-step manufacture, the wall elements are produced in one step and at least two layers of the laminate 12 are applied. Preferably they are treated with a gel or other surface-protection agent, as in the case of single-step manufacture the laminate 12 takes on the role of the armour 14 and the gel or other surface-protection agent is important from the point of view of UV protection.

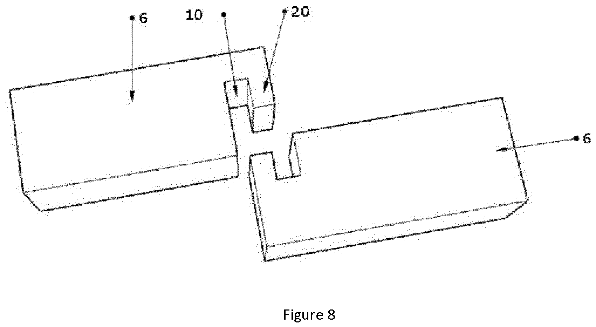

In the cases of wall elements with large dimensions, it may be necessary to assemble these from several elements. In such cases, in the way according to figure 8, both the groove 10 and the tongue 20 parts are formed on the same wall element, which connect to a sidewall element 6 formed in the same way. Such a joint also serves as additional bracing in the longitudinal or lateral direction, when this is required due to greater loading.

### Examples

### Example 1: the production of a superstructure in four steps

In the first step the negative profiles 1 and the positive profiles 2 used for the purpose of bracing and as connection elements are manufactured, preferably using a tool-pair (tools for producing grooves and tongues). The width of the profiles is 75 mm and the height of the profiles is 20 mm. The height of the profiles determines the thickness of the wall element assembled from them. The groove 10 has dimensions of 18*18 mm, and the dimensions of the tongue are 14*14 mm. The core material 11 used in the case of the profiles is polystyrene foam, and SR 8500 epoxy resin and laminate 12 containing biaxial fibreglass are secured onto its entire surface.

In the second step the individual wall elements are created. In the case of the floor element 7, the frame is formed with four negative profiles 1 and the filling part 3 is filled with core material 11 consisting of XPS polystyrene foam. Following this the laminate 12 is placed on the entire front panel *a* and back panel *b* of the floor element 7.

The wall element is placed on a vacuum table under a pressure of 200 mbar to facilitate the curing of the resin 15 used in the laminate 12.

Four negative profiles 1 are also used in the case of the roof element 8 and the filling part 3 is filled with XPS polystyrene foam. The roof element 8 does not contain additional substrate material 13 or laminate 12.

The front wall 4 and the back wall 5 contain two vertical negative profiles 1 and two horizontal positive profiles 2 in addition to the core material 11 of XPS polystyrene foam serving as the filling part 3.

The sidewalls 6 contain four positive profiles 2, apart from this their production corresponds to that described in the case of the roof element 8.

In the third step armour 14 consisting of polyester panelling is secured to both surfaces of the wall elements on a vacuum table using two-component structural adhesive.

Finally, in the fourth step, the individual wall elements are assembled and the gaps are filled with SR 8500 epoxy resin, thereby creating the superstructure 100.

### Example 2: superstructure 100 with reinforced wall elements

The structure of the superstructure 100 according to example 1 may be reinforced with the use of larger-sized elements. The height of the negative profile 1 according to the example is 90 mm and its width is 320 mm. The size of the groove 10 is 40*40 mm. The height of the positive profile 2 is 90 mm and its width is 320 mm. The size of the tongue 20 is 37*37 mm.

Furthermore, the floor element 7 is covered with a layer of balsawood, as additional substrate material 13, on its front panel *a*, onto which a further layer of laminate 12 is placed and the laminate 12 placed on the back panel *b* is folded up onto this last layer of upper laminate 12. At the same time the other wall elements are also reinforced with laminate 12 covering their entire front panels *a*. A pressure of 460 mbar is applied on the vacuum table.

### Example 3: superstructure 100 for the transportation of heat-sensitive goods

In the case of the use of the superstructure 100 for the transportation of heat-sensitive goods, XPS polystyrene is used as core material 11 due to its insulation ability and low weight, because, due to this, it may be used at a greater thickness.

### Example 4: superstructure 100 for the transportation of money or works of art

The superstructure 100 may be used for the transportation of valuable goods, especially money, gold or works of art. In this case meta aramid substrate material 13 and epoxy resin subjected to a ballistics test are used in the laminate 12.

The advantage of the solution according to the invention is that there is no need for separate beams or braces for the connection of the individual wall elements, which makes manufacture simpler and cheaper. In addition, due to the materials used, the side joints and the lack of separate beams, the weight of the superstructure 100 may be reduced as compared to the state of the art. A significant advantage of the superstructure 100 according to the invention is that due to the lack of beams thermal bridges reducing the effectiveness of the insulation are not formed.

A further advantage of the solution according to the invention is that superstructures 100 that may be used for various purposes may be produced by varying the core material and the laminate.

## Claims

1. Superstructure (100) especially for goods vehicles with a thermally insulated load space, which has wall elements (4, 5, 6, 7, 8) and armour (14), **characterised in that** the wall elements (4, 5, 6, 7, 8) are constructed from negative profiles (1) and/or positive profiles (2) and a filling part (3), the negative profiles (1) and/or the positive profiles (2) form a frame that encompasses a filling part (3), the wall elements (4, 5, 6, 7, 8) have a front panel (*a*) and a back panel (*b*), and tongues (20) located on the positive profiles (2) of the individual wall elements connect into grooves (10) located on the negative profiles (1) of the neighbouring wall elements.

2. Superstructure (100) according to claim 1, **characterised in that** the order of the layers of the negative profiles (1) and the positive profiles (2) forming the wall elements from the inside progressing towards the outer sides is as follows: core material (11) and laminate (12); which laminate (12) contains resin (15) and a substrate material (13); and the filling part (3) of the wall elements contains core material (11).

3. Superstructure (100) according to claim 1 or 2, **characterised in that** the core material (11) is selected from among the following: polystyrene foam, PVC foam, polyethylene foam, balsawood, or a combination of these; the substrate material (13) is selected from among the following: glass fibre matting, woven glass fibre, biaxial fibreglass, balsawood, or carbon fibre, aramid, or a combination of these; and the resin (15) is selected from among the following: epoxy resin, polyester resin, low styrene polyester resin, vinyl ester resin, or a combination of these.

4. Superstructure (100) according to any of claims 1 to 3, **characterised in that** the armour (14) is polyester panelling, or metal panelling, preferably glass fibre reinforced polyester panelling.

5. Superstructure (100) according to any of claims 2 to 4, **characterised in that** the core material (11) is polystyrene foam, the substrate material (13) is biaxial fibreglass, and the resin (15) is epoxy resin.

6. Superstructure (100) according to any of claims 2 to 5, **characterised in that** among the wall elements one of them is a floor element (7), and at least one front panel (*a*) and/or back panel (b) of the floor element (7) contains at least one further layer of laminate (12), and preferably at least one further layer of balsawood as substrate material (13) between two layers of laminate (12).

7. Superstructure (100) according to any of claims 1 to 6, **characterised in that** the front panel (*a*) and the back panel (*b*) of the wall elements are provided with armour (14) in such a way that after the wall elements have been secured to each other substantially the entire surface of the front panel (*a*) and the back panel (*b*) are covered with armour (14).

8. Superstructure (100) according to any of claims 1 to 7, **characterised in that** the superstructure (100) contains an apparatus selected form the following: cooling apparatus, freezing apparatus, heating apparatus, ventilation apparatus, watering apparatus and a combination of these.

9. Method for the manufacture of the superstructure (100) according to any of claims 1 to 8, which contains the following steps:
a) Forming a frame from negative profiles (1) and/or positive profiles (2) and the space delimited in this way is filled with core material (11) in order to create the filling part (3);
b) Covering the finished wall elements with armour (14), preferably with glass fibre reinforced polyester panelling to the extent that after the wall panels have been secured to each other the entire free surface of the front panel (*a*) and the back panel (*b*) is covered;
c) Fitting together the finished wall elements using the grooves (10) located in the negative profiles (1) and the tongues (20) located in the positive profiles (2), preferably the space remaining at the joints is filled with adhesive or resin (15).

10. The use of the superstructure (100) according to any of claims 1 to 8 for the transportation of heat-sensitive goods.

11. The use of the superstructure (100) according to any of claims 1 to 8 for the transportation of works of art, money, gold.

## Patentansprüche

1. Aufbau (100) insbesondere für Lastkraftwagen mit einem thermisch isolierten Laderaum, der Wandelemente (4, 5, 6, 7, 8) und eine Panzerung (14) aufweist, **dadurch gekennzeichnet, dass** die Wandelemente (4, 5, 6, 7, 8) aus Negativprofilen (1) und/oder Positivprofilen (2) und einem Füllteil (3) aufgebaut sind, die Negativprofile (1) und/oder die Positivprofile (2) einen Rahmen bilden, der einen Füllteil (3) umschließt, die Wandelemente (4, 5, 6, 7, 8) eine Frontplatte (*a*) und eine Rückenplatte (*b*) aufweisen, und an den Positivprofilen (2) der einzelnen Wandelemente befindliche Federn (20) in an den Negativprofilen (1) der benachbarten Wandelemente befindliche Nuten (10) eingreifen.

2. Aufbau (100) nach Anspruch 1, **dadurch gekennzeichnet, dass** die Reihenfolge der Schichten der Negativprofile (1) und der Positivprofile (2), die die Wandelemente bilden, von innen zu den Außenseiten hin wie folgt ist: Kernmaterial (11) und Laminat (12); wobei das Laminat (12) Harz (15) und ein Substratmaterial (13) enthält; und der Füllteil (3) der Wandelemente Kernmaterial (11) enthält.

3. Aufbau (100) nach Anspruch 1 oder 2, **dadurch gekennzeichnet, dass** das Kernmaterial (11) aus den folgenden Materialien ausgewählt ist: Polystyrolschaum, PVC-Schaum, Polyethylenschaum, Balsaholz oder eine Kombination davon; das Substratmaterial (13) aus den folgenden Materialien ausgewählt ist: Glasfasermatten, gewebte Glasfasern, biaxiale Glasfasern, Balsaholz, oder Kohlefasern, Aramid, oder eine Kombination davon; und das Harz (15) aus den folgenden Materialien ausgewählt ist: Epoxidharz, Polyesterharz, Polyesterharz mit niedrigem Styrolgehalt, Vinylesterharz oder eine Kombination davon.

4. Aufbau (100) nach einem der Ansprüche 1 bis 3, **dadurch gekennzeichnet, dass** die Panzerung (14) eine Polyesterverkleidung oder eine Metallverkleidung, vorzugsweise eine glasfaserverstärkte Polyesterverkleidung, ist.

5. Aufbau (100) nach einem der Ansprüche 2 bis 4, **dadurch gekennzeichnet, dass** das Kernmaterial (11) Polystyrolschaum ist, das Substratmaterial (13) biaxiales Glasfasergewebe ist und das Harz (15) Epoxidharz ist.

6. Aufbau (100) nach einem der Ansprüche 2 bis 5, **dadurch gekennzeichnet, dass** unter den Wandelementen eines davon ein Bodenelement (7) ist, und mindestens eine Frontplatte (*a*) und/oder eine Rückenplatte (*b*) des Bodenelements (7) mindestens eine weitere Schicht aus Laminat (12), und vorzugsweise mindestens eine weitere Schicht aus Balsaholz als Substratmaterial (13) zwischen zwei Schichten aus Laminat (12) enthält.

7. Aufbau (100) nach einem der Ansprüche 1 bis 6, **dadurch gekennzeichnet, dass** die Frontplatte (*a*) und die Rückenplatte (*b*) der Wandelemente mit einer Panzerung (14) vorgesehen sind, so dass nach dem Befestigen der Wandelemente aneinander im Wesentlichen die gesamte Oberfläche der Frontplatte (*a*) und der Rückenplatte (*b*) mit der Panzerung (14) verkleidet ist.

8. Aufbau (100) nach einem der Ansprüche 1 bis 7, **dadurch gekennzeichnet, dass** der Aufbau (100) eine Vorrichtung enthält, die aus den folgenden ausgewählt ist: Kühlvorrichtung, Gefriervorrichtung, Heizvorrichtung, Belüftungsvorrichtung, Bewässerungsvorrichtung und eine Kombination davon.

9. Verfahren zur Herstellung des Aufbaus (100) nach einem der Ansprüche 1 bis 8, das die folgenden Schritte enthält:
a) Bilden eines Rahmens aus Negativprofilen (1) und/oder Positivprofilen (2) und Ausfüllen des so begrenzten Raumes mit Kernmaterial (11), um den Füllteil (3) zu bilden;
b) Verkleiden der fertigen Wandelemente mit einer Panzerung (14), vorzugsweise mit einer glasfaserverstärkten Polyesterverkleidung, so dass nach der Befestigung der Wandplatten aneinander die gesamte freie Oberfläche der Frontplatte (*a*) und der Rückenplatte (*b*) verkleidet ist;
c) Zusammenfügen der fertigen Wandelemente unter Verwendung der in den Negativprofilen (1) befindlichen Nuten (10) und der in den Positivprofilen (2) befindlichen Federn (20), wobei der an den Stoßstellen verbleibende Raum vorzugsweise mit Klebstoff oder Harz (15) ausgefüllt wird.

10. Verwendung des Aufbaus (100) nach einem der Ansprüche 1 bis 8 für den Transport von wärmeempfindlichen Gütern.

11. Verwendung des Aufbaus (100) nach einem der Ansprüche 1 bis 8 für den Transport von Kunstgegenständen, Geld, Gold.

## Revendications

1. Superstructure (100), en particulier pour des véhicules de transport de marchandises avec un espace de chargement thermiquement isolé, qui comporte des éléments de paroi (4, 5, 6, 7, 8) et une armure (14), **caractérisée en ce que** les éléments de paroi (4, 5, 6, 7, 8) sont construits à partir de profils négatifs (1) et/ou de profils positifs (2) et d'une partie de remplissage (3), les profils négatifs (1) et/ou les profils positifs (2) forment un cadre qui englobe une partie de remplissage (3), les éléments de paroi (4, 5, 6, 7, 8) ont un panneau avant (*a*) et un panneau arrière (*b*), et des languettes (20) situées sur les profils positifs (2) des éléments de paroi individuels se raccordent aux rainures (10) situées sur les profils négatifs (1) des éléments de paroi avoisinants.

2. Superstructure (100) selon la revendication 1, **caractérisée en ce que** l'ordre des couches des profils négatifs (1) et des profils positifs (2) formant les éléments de paroi de l'intérieur vers les côtés extérieurs est le suivant : matériau central (11) et matériau composite (12) ; ce matériau composite (12) contient de la résine (15) et un matériau de substrat (13) ; et la partie de remplissage (3) des éléments de paroi contient le matériau central (11).

3. Superstructure (100) selon la revendication 1 ou 2, **caractérisée en ce que** le matériau central (11) est choisi parmi les matériaux suivants : mousse de polystyrène, mousse de PVC, mousse de polyéthylène, bois de balsa, ou une combinaison de ceux-ci ; le matériau de substrat (13) est choisi parmi les matériaux suivants : tissu en fibre de verre, fibre de verre tissée, fibre de verre biaxiale, bois de balsa, ou fibre de carbone, aramide, ou une combinaison de ceux-ci ; et la résine (15) est choisie parmi les suivantes : résine époxy, résine polyester, résine polyester à faible teneur en styrène, résine vinylester, ou une combinaison de ceux-ci.

4. Superstructure (100) selon l'une quelconque des revendications 1 à 3, **caractérisée en ce que** l'armure (14) est un revêtement en polyester ou en métal, de préférence un revêtement en polyester renforcé de fibres de verre.

5. Superstructure (100) selon l'une quelconque des revendications 2 à 4, **caractérisée en ce que** le matériau central (11) est une mousse de polystyrène, le matériau de substrat (13) est une fibre de verre biaxiale et la résine (15) est une résine époxy.

6. Superstructure (100) selon l'une quelconque des revendications 2 à 5, **caractérisée en ce que** parmi les éléments de paroi, l'un d'entre eux est un élément de plancher (7), et au moins un panneau avant (*a*) et/ou arrière (*b*) de l'élément de plancher (7) contient au moins une couche supplémentaire de matériau composite (12), et de préférence au moins une couche supplémentaire de bois de balsa comme matériau de substrat (13) entre deux couches de matériau composite (12).

7. Superstructure (100) selon l'une quelconque des revendications 1 à 6, **caractérisée en ce que** le panneau avant (*a*) et le panneau arrière (*b*) des éléments de paroi sont pourvus d'une armure (14) de telle sorte qu'après que les éléments de paroi ont été fixés l'un à l'autre, la quasi-totalité de la surface du panneau avant (*a*) et du panneau arrière (*b*) est recouverte d'une armure (14).

8. Superstructure (100) selon l'une quelconque des revendications 1 à 7, **caractérisée en ce que** la superstructure (100) contient un appareil choisi parmi les suivants : appareil de refroidissement, appareil de congélation, appareil de chauffage, appareil de ventilation, appareil d'arrosage et une combinaison de ceux-ci.

9. Procédé pour la fabrication de la superstructure (100) selon l'une quelconque des revendications 1 à 8, qui comprend les étapes suivantes :
a) formation d'un cadre à partir de profils négatifs (1) et/ou de profils positifs (2) et l'espace ainsi délimité est rempli d'un matériau central (11) afin de créer la partie de remplissage (3) ;
b) recouvrage des éléments de paroi finis d'une armure (14), de préférence d'un revêtement en polyester renforcé de fibres de verre, de sorte qu'après avoir fixé les panneaux de paroi l'un à l'autre, toute la surface libre du panneau avant (*a*) et du panneau arrière (*b*) est recouverte ;
c) assemblage des éléments de paroi finis à l'aide des rainures (10) situées dans les profils négatifs (1) et des languettes (20) situées dans les profils positifs (2), de préférence l'espace restant au niveau des joints est rempli avec de l'adhésif ou de la résine (15).

10. Utilisation de la superstructure (100) selon l'une quelconque des revendications 1 à 8 pour le transport de marchandises sensibles à la chaleur.

11. Utilisation de la superstructure (100) selon l'une quelconque des revendications 1 à 8 pour le transport d'œuvres d'art, d'argent, d'or.
